(19) Europäisches Patentamt
European Patent Office
Office européen des brevets

(11) Veröffentlichungsnummer: **0 439 038 A1**

# (12) EUROPÄISCHE PATENTANMELDUNG

(21) Anmeldenummer: **91100353.1**

(22) Anmeldetag: **12.01.91**

(51) Int. Cl.5: **C09B 43/42**, C09B 67/22, D06P 1/18

(30) Priorität: **22.01.90 DE 4001708**

(43) Veröffentlichungstag der Anmeldung: **31.07.91 Patentblatt 91/31**

(84) Benannte Vertragsstaaten: **CH DE FR GB IT LI**

(71) Anmelder: **CASSELLA Aktiengesellschaft**
**Hanauer Landstrasse 526**
**W-6000 Frankfurt am Main 61(DE)**

(72) Erfinder: **Bühler, Ulrich, Dr.**
**Kastanienweg 8**
**W-8755 Alzenau(DE)**
Erfinder: **Boos, Margareta**
**Am See 6**
**W-6234 Hattersheim(DE)**
Erfinder: **Kühn, Reinhard**
**Heinrich-Bleicher-Strasse 39**
**W-6000 Frankfurt am Main 50(DE)**

(74) Vertreter: **Urbach, Hans-Georg, Dr. et al**
**CASSELLA AKTIENGESELLSCHAFT**
**Patentabteilung Hanauer Landstrasse 526**
**W-6000 Frankfurt am Main 61(DE)**

## (54) Monoazofarbstoffe, ihre Herstellung und Verwendung.

(57) Die vorliegende Erfindung betrifft wertvolle Monoazofarbstoffe der allgemeinen Formel I

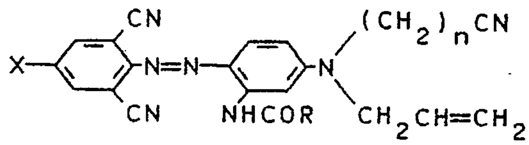

(I)

in der

- X Methyl, Ethyl, Fluor, Chlor, Brom, Methoxy oder Ethoxy
- R Methyl, Ethyl, n-Propyl, i-Propyl, n-Butyl, i-Butyl oder sek.-Butyl und
- n 2 oder 3

bedeuten,
Mischungen von Farbstoffen der allgemeinen Formel I sowie die Herstellung dieser Farbstoffe und ihrer Mischungen und ihre Verwendung zum Färben von hydrophoben Fasermaterialien.

EP 0 439 038 A1

## MONOAZOFARBSTOFFE, IHRE HERSTELLUNG UND VERWENDUNG

Die vorliegende Erfindung betrifft wertvolle Monoazofarbstoffe der allgemeinen Formel I

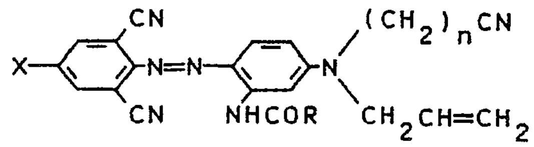

(I)

in der

- x Methyl, Ethyl, Fluor, Chlor, Brom, Methoxy oder Ethoxy
- R Methyl, Ethyl, n-Propyl, i-Propyl, n-Butyl, i-Butyl oder sek.-Butyl und
- n 2 oder 3

bedeuten.

Die Erfindung betrifft auch Mischungen von Farbstoffen der allgemeinen Formel I sowie die Herstellung dieser Farbstoffe und ihrer Mischungen und ihre Verwendung zum Färben von hydrophoben Fasermaterialien.

Ein bevorzugter Rest X ist Ethyl, ein besonders bevorzugter Rest Methyl. Bevorzugte Reste R sind Ethyl und i-Propyl. Ein besonders bevorzugter Rest R ist n-Propyl.

Bevorzugt ist n gleich 2.

Besonders bevorzugte Farbstoffe sind solche, in denen X für Methyl, R für Ethyl und i-Propyl und insbesondere für n-Propyl und n für 2 steht.

Den erfindungsgemäßen Farbstoffen der allgemeinen Formel I ähnliche Farbstoffe sind z.B. in der EP 39054, der GB 2146652, der EP 25903, der DP 2711130 und der DOS 3511728 beschrieben. Die in den vier letztgenannten Schriften erwähnten Farbstoffe sind 2,6-Dicyanazofarbstoffe, die auf Grund ihrer Brillanz und ihres Farbtones als Ersatzprodukte für rote Anthrachinonfarbstoffe wie z.B. C.I. Disperse Red 60 in Frage kommen. Das anthrachinoide C.I. Disperse Red 91 ist im Vergleich zu C.I. Disperse Red 60 im Farbton gelbstichiger und kann von den Farbstoffen des Standes der Technik nicht ersetzt werden. Wenn man versucht, z.B. die in der GB 2146652 beschriebenen blaustichig roten Dicyanazofarbstoffe mit einem (ebenfalls brillanten) Gelb-, Orange- oder Scharlach-Farbstoff auf den Farbton von C.I. Disperse Red 91 abzunuancieren, kommt es zu einer unerwünschten Abtrübung bzw. zu einer Verschlechterung der Echtheiten.

Mit den erfindungsgemäßen Farbstoffen kann man demgegenüber bei annähernd gleicher Brillanz den Farbton von C.I. Disperse Red 91 erzielen, wobei im Vergleich zu den Anthrachinonfarbstoffen und auch zu den in den o.g. Schriften angeführten Azofarbstoffen Vorteile im färberischen Verhalten und bei verschiedenen Gebrauchsechtheiten erzielt werden.

Vorteile im färberischen Verhalten sind z.B. zu sehen im Aufbau- und Ausziehverhalten, in der Baumwollanschmutzung und in der pH-und Reduktionsempfindlichkeit. Vorteile in den Gebrauchsechtheiten zeigen sich z.B. in der Licht-, Thermofixier-, Thermomigrier- und in der Wasserechtheit.

Insgesamt ergibt sich hieraus für die erfindungsgemäßen Farbstoffe und ihre Mischungen ein nicht vorhersehbarer, erheblicher anwendungstechnischer Vorteil.

Die Herstellung der erfindungsgemäße Farbstoffe erfolgt beispielsweise dadurch, daß man einen Azofarbstoff der allgemeinen Formel II

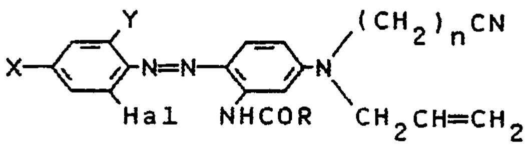

(II)

in der Y für Cyan oder Hal und Hal ein Halogenatom, wie Chlor oder insbesondere Brom, bedeutet, in an sich bekannter Weise, z.B. nach den Angaben der DE-OS 1809920, der DE-OS 1809921, der GB-PS 1184825, der DE-AS 1544563, der DE-OS 2310745, der DE-AS 2456495, der DE-AS 2610675, der DE-OS

2724116, der DE-OS 2724117, der DE-OS 2834137, der DE-OS 2341109, der US-PS 3821195, der DE-OS 2715034 oder der DE-OS 2134896 einer nucleophilen Austauschreaktion unterwirft, wobei als nucleophiles Agens das Cyanidion $CN^{\ominus}$ eingesetzt wird. Bei dieser Reaktion wird in dem Farbstoff der Formel II Hal gegen CN ausgetauscht.

Als Lösungsmittel für die Austauschreaktion werden inerte organische Lösungsmittel, wie z.B. Nitrobenzol oder Glykol-oder Diglykol-mono-methyl oder -mono-ethylether oder Mischungen solcher Lösungsmittel untereinander und mit tertiären organischen Stickstoffbasen, dipolare aprotische Lösungsmitel, wie z.B. N-Methylpyrrolidon, Pyridin, Dimethylformamid, Dimethylsulfoxyd oder Dicyan-dialkylthioether eingesetzt. Weiterhin sind als Medium für die Austauschreaktion Wasser oder wäßrige Systeme bestehend aus Wasser und einem mit Wasser unmischbaren organischen Lösungsmittel, wie z.B. Nitrobenzol, vorzugsweise in Gegenwart eines Netz- bzw. Dispergiermittels oder eines bekannten Phasentransferkatalysators oder aus Wasser und einem wasserlöslichen, inerten organischen Lösungsmittel, wie Ethylenglykol oder Dimethylformamid, geeignet.

Günstig wirkt sich auf die Austauschreaktion auch die Anwesenheit von organischen, basischen Stickstoffverbindungen, wie z.B. Pyridin und Pyridinbasen, aus.

Die Reaktionstemperaturen für die Austauschreaktion liegen normalerweise zwischen 20 und 150° C.

Das nucleophile Agenz $CN^{\ominus}$ wird der Reaktion in Form eines gegebenenfalls komplexen Metallcyanids, wie z.B. eines Alkali- oder Erdalkalicyanids, Zinkcyanids, Alkalicyano-zinkats oder -ferrats, vorzugsweise aber in Form von Kupfer-I-cyanid oder eines Kupfer-I-cyanid ausbildenden Systems, zugefügt. Besonders bewährt ist der Einsatz einer Kombination von Alkalicyanid mit Kupfer-I-cyanid, wobei das Gewichtsverhältnis von Alkali und Kupfersalz in weiten Grenzen variiert werden kann.

Der gängige Bereich für das Gewichtsverhältnis Alkalicyanid:Kupfer-I-cyanid liegt bei 5:95 bis 95:5. Auch außerhalb dieser Grenzen ist noch die positive gegenseitige Beeinflussung der Komponenten feststellbar. Selbstverständlich ist es auch möglich, das Kupfer-I-cyanid seinerseits durch ein Kupfer-I-cyanid ausbildendes System, wie z.B. einer Kombination von Alkalicyanid mit einem anderen Kupfersalz, vorzugsweise Kupfer-I-salz, wie z.B. einem Kupfer-I-halogenid, zu ersetzen.

Die zur Herstellung der erfindungsgemäßen Farbstoffe der allgemeinen Formel I erforderlichen Farbstoffe der allgemeinen Formel II können dadurch hergestellt werden, daß eine Diazoniumverbindung eines Amins der allgemeinen Formel III

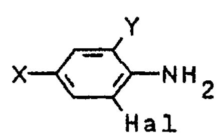 (III)

worin X, Y und Hal wie oben angegeben definiert sind in an sich bekannter Weise mit einer Kupplungskomponente der allgemeinen Formel IV

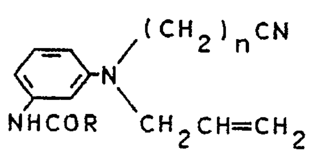 (IV)

worin R und n wie oben angegeben definiert sind, gekuppelt wird.

Aus den Aminen der allgemeinen Formel III werden die Diazoniumverbindungen in an sich bekannter Weise durch Einwirkung von salpetriger Säure oder anderen Nitrosoniumionen bildenden Systemen in einer Mineralsäure oder einem mineralsauren wäßrigen Medium, einer Niederalkancarbonsäure, wie z.B. Ameisensäure, Essigsäure oder Propionsäure oder deren Mischungen, oder einem organischen Lösungsmittel bei Temperaturen von -15° C bis 40° C erhalten.

Die Kupplung erfolgt ebenfalls in an sich bekannter Weise durch Vereinigung der erhaltenen Diazolösung mit einer Lösung der Kupplungskomponente bei Temperaturen von 0 bis 40° C, vorzugsweise 0 bis 25° C, in einem geeigneten Lösungsmittel, wie z.B. einem Alkanol mit 1 bis 4 C-Atomen Dimethylformamid, vorzugsweise in mit Schwefelsäure, Salzsäure oder Phosphorsäure angesäuertem Wasser, oder einer gegebenenfalls wasserhaltigen Niederalkancarbonsäure oder einem Niederalkancarbonsäuregemisch.

In manchen Fällen kann es zweckmäßig sein, während der Kupplung den pH-Wert abzupuffern, z.B. durch Zugabe von Natriumacetat. Die Kupplung ist nach einigen Stunden beendet, und der Farbstoff der Formel II kann wie üblich isoliert und getrocknet werden.

Die benötigten Komponenten der allgemeinen Formeln III und IV lassen sich aus bekannten Handelsprodukten nach bekannten Verfahren herstellen.

Erfindungsgemäße Farbstoffmischungen bestehen aus zwei oder mehreren Farbstoffen der allgemeinen Formel I, in der X, R, und n die oben angegebenen Bedeutungen haben. Bevorzugt sind Mischungen aus Farbstoffen der allgemeinen Formel I, die sich nur in der Bedeutung von X und R unterscheiden. Besonders bevorzugte Mischungen sind solche, in denen sich die Mischungskomponenten nur in der Bedeutung von R unterscheiden.

In den erfindungsgemäßen Farbstoffmischungen kann das Verhältnis der verschiedenen Farbstoffe der allgemeinen Formel I in relativ weiten Grenzen variieren. Im allgemeinen beträgt der Mindestgewichtsanteil einer Komponente 10 % und ihr maximaler Gewichtsanteil 90 %. Bei Farbstoffmischungen, die nur aus zwei Farbstoffen der allgemeinen Formel I bestehen, ist ein Gewichtsverhältnis von 70:30 bis 30:70 bevorzugt, d.h. der Gewichtsanteil eines Farbstoffs beträgt 30 bis 70 %.

Die erfindungsgemäßen Mischungen können hergestellt werden durch Mischen der separat hergestellten und gefinishten Einzelfarbstoffkomponenten. Dieses Mischen kann in geeigneten Mischern oder Mühlen oder aber durch Einrühren in die Färbeflotte geschehen. Es ist aber bevorzugt, die separat hergestellten Einzelfarbstoffkomponenten gemeinsam zu finishen, wobei das Mischen bei der Herstellung von Farbstoffpulvern unmittelbar vor dem Sprühtrocknen, bei Farbstoffpulvern und flüssigen Farbstoffpräparationen, vorzugsweise vor dem Aufmahlen, erfolgen kann. Besonders bevorzugt ist hierbei eine gemeinsame thermische Stabilisierung vor dem Aufmahlen.

Nach einem besonders bevorzugten Verfahren können die erfindungsgemäßen Farbstoffmischungen dadurch hergestellt werden, daß man in Farbstoffmischungen, die aus mindestens zwei Farbstoffen der allgemeinen Formel II bestehen, in an sich bekannter Weise Halogen gegen Cyan austauscht,wie es z.B. vorstehend bereits für die Einzelfarbstoffe beschrieben ist, und die erhaltene Mischung finisht. Die Zusammensetzung der Mischung der Farbstoffe der allgemeinen Formel II wird dabei so gewählt, daß erfindungsgemäße Farbstoffmischungen entstehen.

Die erfindungsgemäßen Farbstoffe und Farbstoffmischungen sind einzeln oder im Gemisch mit anderen Dispersionsfarbstoffen vorzüglich zum Färben und Bedrucken von hydrophoben synthetischen Materialien geeignet. Als hydrophobe synthetische Materialien kommen z.B. in Betracht: Cellulose-2$^1/_2$-acetat, Cellulosetriacetat, Polyamide und hochmolekulare Polyester. Vorzugsweise werden die erfindungsgemäßen Farbstoffe zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Zellulosetriacetat eingesetzt.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein. Das Färben des genannten Fasergutes mit den erfindungsgemäßen Farbstoffen oder Farbstoffmischungen erfolgt in an sich bekannter Weise, vorzugsweise aus wäßriger Suspension, gegebenenfalls in Gegenwart von Carriern, zwischen 80 bis ca. 110 °C nach dem Ausziehverfahren oder nach dem HT-Verfahren im Färbeautoklav bei 110 bis 140 °C, sowie nach dem sogenannten Thermofixierverfahren, wobei die Ware mit der Färbeflotte geklotzt und anschließend bei etwa 80 bis 230 °C fixiert wird. Das Bedrucken der genannten Materialien kann in an sich bekannter Weise so durchgeführt werden, daß die erfindungsgemäßen Farbstoffe oder Farbstoffmischungen in eine Druckpaste einverleibt werden und die damit bedruckte Ware zur Fixierung des Farbstoffs, gegebenenfalls in Gegenwart eines Carriers, bei Temperaturen zwischen 80 bis 230 °C mit HT-Dampf, Druckdampf oder Trockenhitze behandelt wird. Man erhält auf diese Weise sehr farbstarke rote Färbungen und Drucke mit sehr guten Echtheitseigenschaften, insbesondere einer sehr guten Licht-, Thermofixier-, Thermomigrier- und Waschechtheit und einer geringen pH- und Reduktionsempfindlichkeit. Besonders hervorzuheben ist die sehr gute Heißlichtechtheit.

Die erfindungsgemäßen Farbstoffe oder Farbstoffmischungen eignen sich auch zum Färben der vorstehend aufgeführten hydrophoben Materialien aus organischen Lösungsmitteln nach den hierbei bekannten Methoden und zum Färben in der Masse.

In den bei obigen Applikationen eingesetzten Färbeflotten und Druckpasten sollen die erfindungsgemäßen Farbstoffe oder Farbstoffmischungen in möglichst feiner Verteilung vorliegen.

Die Feinverteilung der Farbstoffe erfolgt in an sich bekannter Weise dadurch, daß man den in der Fabrikation anfallenden Farbstoff zusammen mit Dispergiermiteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische

Oberfläche erreicht wird und die Sedimentation des Farbstoffs möglichst gering ist. Die Teilchengrößen der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gewichtsprozent und einen Dispergiermittelgehalt bis zu etwa 25 % eingestellt. Aus ökonomischen Gründen werden Farbstoffgehalte von 15 Gewichtsprozent meist nicht unterschritten.

Die Dispersionen können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natriumpentachlorphenolat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs-und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt.

Soll der Farbstoff oder die Farbstoffmischung für den Textildruck herangezogen werden, so werden die erforderlichen Mengen der Farbstoffeinstellungen zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

Die Erfindung wird durch die folgenden Beispiele weiter erläutert. Prozentangaben sind Gewichtsprozente, Teile sind Gewichtsteile.

Beispiel 1

a) In eine Suspension aus 100 ml Dimethylsulfoxid, 4,3 g Natriumcyanid und 14 g Kupfer-I-cyanid werden bei 70 bis 75 °C 54,7 g des Farbstoffs der Formel V

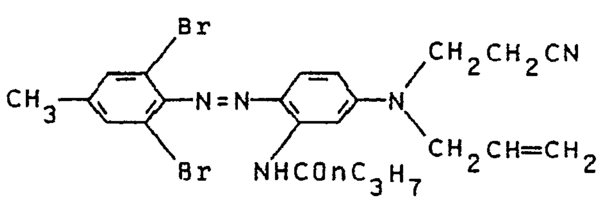

(V)

eingetragen und 30 min bei dieser Temperatur gerührt. Dann wird die Temperatur 30 min auf 110 °C angehoben und der Ansatz anschließend langsam kaltgerührt, abgesaugt, mit 45 ml Dimethylsulfoxid, 7,5%iger wäßriger Ammoniaklösung und Wasser gewaschen und unter vermindertem Druck getrocknet. Man erhält so 39,3 g eines brillianten roten Farbstoffs der Formel VI

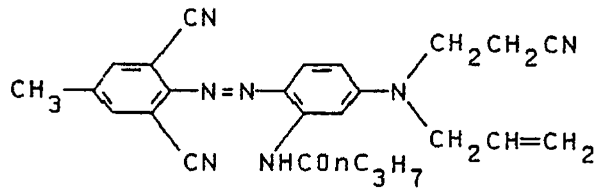

(VI)

der bei 516 nm sein Absorptionsmaximum hat und sich in o-Dichlorbenzol mit klarem roten Farbton löst.

b) Aus 30 Teilen des Farbstoffs der Formel VI und 70 Teilen eines Dispergiermittels aus der Reihe der Ligninsulfonate stellt man durch wäßriges Vermahlen in einer Perlmühle eine feine Farbstoffdispersion her und trocknet diese durch Sprühtrocknung.

c) 1,2 g der so erhaltenen Farbstoffpräparation werden in 2000 g Wasser dispergiert. Die Dispersion wird mit Essigsäure auf einen pH-Wert von 4 - 5 eingestellt und mit 4 g wasserfreiem Natriumacetat und 2 g eines handelsüblichen Dispergiermittels auf Basis eines Naphthalinsulfonsäure-Formaldehyd-Kondensats versetzt. In die so erhaltene Färbeflotte bringt man 100 g eines Polyestergewebes auf Basis von Polyethylenglykolterephthalat ein und färbt 30 min bei 130 °C. Nach anschließendem Spülen, reduktivem Nachbehandeln mit einer 0,2%igen wäßrigen Natriumdithionitlösung während 15 min bei 70 bis 80 °C, Spülen und Trocknen erhält man eine farbstarke rote Färbung mit sehr guten coloristischen Eigenschaften, insbesondere sehr guter Thermofixier- und Lichtechtheit.

Beispiel 2

a) Werden, wie in Beispiel 1 beschrieben, 53,3 g des Farbstoffs der Formel VII

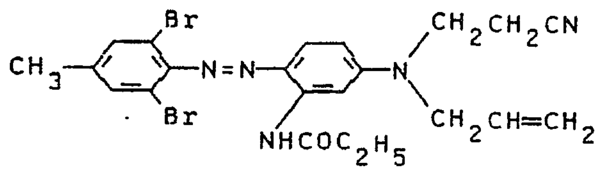

(VII)

einem Cyanaustausch unterworfen, so erhält man 37 g eines brillanten roten Farbstoffs der Formel VIII

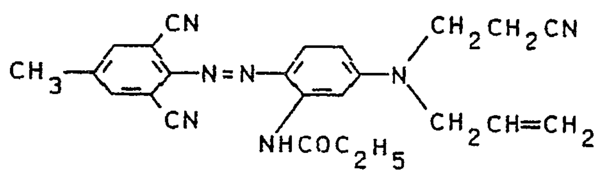

(VIII)

der bei 516 nm sein Absorptionsmaximum hat und sich in o-Dichlorbenzol mit klarem roten Farbton löst.

b) 15,0 g des so erhaltenen Farbstoffs werden in feiner Verteilung einer Druckpaste, die 45,0 g Johannisbrotkernmehl, 6,0 g 3-nitrobenzolsulfonsaures Natrium und 3,0 g Zitronensäure auf 100 g enthält, einverleibt. Wird Polyester mit dieser Druckpaste bedruckt, das behandelte Gewebe nach dem Trocknen 45 sek. bei 210 °C thermosoliert, so erhält man einen farbstarken brillanten roten Druck mit hervorragenden Echtheiten, insbesondere einer guten Thermofixierechtheit und Lichtechtheit.

Analog den Beispielen 1 und 2 lassen sich die erfindungsgemäßen Farbstoffe der folgenden Tabellen herstellen. Sie färben hydrophobe Fasern ebenfalls in vollen roten bis rotvioletten Nuancen mit ausgezeichneten Echtheiten. In der letzten Spalte der nachfolgenden Tabellen sind für die Farbnuancen folgende Abkürzungen verwendet:

| | |
|---|---|
| rot | 1 |
| blaustichiges rot | 2 |
| rotviolett | 3 |

Tabelle 1

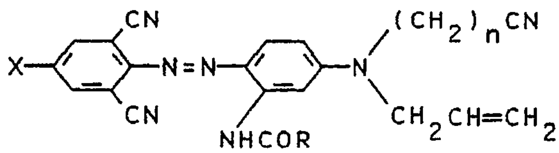

| Bsp. | X | R | n | Farbton auf PES |
|---|---|---|---|---|
| 3 | $CH_3$ | $iC_3H_7$ | 2 | 1 |
| 4 | $CH_3$ | $CH_3$ | 2 | 1 |
| 5 | $CH_3$ | $CH_3$ | 3 | 1 |
| 6 | $CH_3$ | $C_2H_5$ | 3 | 1 |
| 7 | $CH_3$ | $nC_3H_7$ | 3 | 1 |
| 8 | $CH_3$ | $iC_3H_7$ | 3 | 1 |
| 9 | $CH_3$ | $nC_4H_9$ | 2 | 1 |
| 10 | $CH_3$ | $nC_4H_9$ | 3 | 1 |
| 11 | $CH_3$ | $iC_4H_9$ | 2 | 1 |
| 12 | $CH_3$ | $iC_4H_9$ | 3 | 1 |
| 13 | $CH_3$ | sek. $C_4H_9$ | 2 | 1 |
| 14 | $C_2H_5$ | $CH_3$ | 2 | 1 |
| 15 | $C_2H_5$ | $CH_3$ | 3 | 1 |
| 16 | $C_2H_5$ | $C_2H_5$ | 2 | 1 |
| 17 | $C_2H_5$ | $C_2H_5$ | 3 | 1 |
| 18 | $C_2H_5$ | $nC_3H_7$ | 2 | 1 |
| 19 | $C_2H_5$ | $nC_3H_7$ | 3 | 1 |
| 20 | $C_2H_5$ | $iC_3H_7$ | 2 | 1 |
| 21 | $C_2H_5$ | $nC_4H_9$ | 2 | 1 |
| 22 | $C_2H_5$ | $nC_4H_9$ | 3 | 1 |

| Bsp. | X | R | n | Farbton auf PES |
|---|---|---|---|---|
| 23 | $C_2H_5$ | $iC_4H_9$ | 2 | 1 |
| 24 | $C_2H_5$ | sek. $C_4H_9$ | 2 | 1 |
| 25 | F | $nC_3H_7$ | 2 | 1 |
| 26 | F | $nC_3H_7$ | 3 | 1 |
| 27 | F | $iC_3H_7$ | 2 | 1 |
| 28 | F | $iC_3H_7$ | 3 | 1 |
| 29 | F | $C_2H_5$ | 3 | 1 |
| 30 | F | $C_2H_5$ | 2 | 1 |
| 31 | F | $CH_3$ | 3 | 1 |
| 32 | Cl | $nC_3H_7$ | 2 | 2 |
| 33 | Cl | $nC_3H_7$ | 3 | 2 |
| 34 | Cl | $C_2H_5$ | 2 | 2 |
| 35 | Cl | $C_2H_5$ | 3 | 2 |
| 36 | Cl | $iC_3H_7$ | 2 | 2 |
| 37 | Cl | $iC_3H_7$ | 3 | 2 |
| 38 | Cl | $CH_3$ | 2 | 2 |
| 39 | Cl | $CH_3$ | 3 | 2 |
| 40 | Cl | $nC_4H_9$ | 2 | 2 |
| 41 | Cl | $iC_4H_9$ | 2 | 2 |
| 42 | Cl | sek. $C_4H_9$ | 2 | 2 |
| 43 | Br | $CH_3$ | 3 | 3 |
| 44 | Br | $C_2H_5$ | 2 | 3 |
| 45 | Br | $C_2H_5$ | 3 | 3 |
| 46 | Br | $iC_3H_7$ | 2 | 3 |
| 47 | Br | $nC_3H_7$ | 2 | 3 |
| 48 | Br | $nC_3H_7$ | 3 | 3 |
| 49 | Br | $nC_4H_9$ | 2 | 3 |
| 50 | Br | $iC_4H_9$ | 2 | 3 |
| 51 | Br | sek. $C_4H_9$ | 2 | 3 |
| 52 | Br | $nC_4H_9$ | 3 | 3 |
| 53 | $OCH_3$ | $CH_3$ | 2 | 1 |
| 54 | $OCH_3$ | $C_2H_5$ | 2 | 1 |
| 55 | $OCH_3$ | $C_2H_5$ | 3 | 1 |
| 56 | $OCH_3$ | $nC_3H_7$ | 2 | 1 |
| 57 | $OCH_3$ | $nC_3H_7$ | 3 | 1 |
| 58 | $OCH_3$ | $iC_3H_7$ | 2 | 1 |

| Bsp. | X | R | n | Farbton auf PES |
|---|---|---|---|---|
| 59 | $OCH_3$ | $nC_4H_9$ | 2 | 1 |
| 60 | $OCH_3$ | $iC_4H_9$ | 2 | 1 |
| 61 | $OCH_3$ | sek. $C_4H_5$ | 2 | 1 |
| 62 | $OC_2H_5$ | $CH_3$ | 2 | 1 |
| 63 | $OC_2H_5$ | $CH_3$ | 3 | 1 |
| 64 | $OC_2H_5$ | $C_2H_5$ | 2 | 1 |
| 65 | $OC_2H_5$ | $C_2H_5$ | 3 | 1 |
| 66 | $OC_2H_5$ | $nC_3H_7$ | 2 | 1 |
| 67 | $OC_2H_5$ | $nC_3H_7$ | 3 | 1 |
| 68 | $OC_2H_5$ | $iC_3H_7$ | 2 | 1 |
| 69 | $OC_2H_5$ | $nC_4H_9$ | 3 | 1 |
| 70 | $OC_2H_5$ | $iC_4H_9$ | 2 | 1 |
| 71 | $OC_2H_5$ | sek. $C_4H_9$ | 2 | 1 |

In der folgenden Tabelle 2 sind erfindungsgemäße Farbstoffmischungen genannt.

Tabelle 2

| Bsp. | X | R | n | Farbton auf PES | Mischungsanteil |
|---|---|---|---|---|---|
| 72 | $CH_3$ | $CH_3$ | 2 | 1 | 50 % |
| | $CH_3$ | $nC_3H_7$ | 2 | | 50 % |
| 73 | $CH_3$ | $C_2H_5$ | 2 | 1 | 70 % |
| | $CH_3$ | $C_2H_5$ | 3 | | 30 % |
| 74 | $CH_3$ | $nC_3H_7$ | 2 | 1 | 80 % |
| | $OCH_3$ | $nC_3H_7$ | 2 | | 20 % |
| 75 | $CH_3$ | $C_2H_5$ | 3 | 1 | 30 % |
| | $CH_3$ | $nC_3H_7$ | 2 | | 70 % |
| 76 | Cl | $nC_3H_7$ | 2 | 2 | 45 % |
| | Br | $nC_3H_7$ | 2 | | 55 % |
| 77 | $CH_3$ | $iC_3H_7$ | 2 | 1-2 | 50 % |
| | Cl | $CH_3$ | 2 | | 50 % |
| 78 | $CH_3$ | $C_2H_5$ | 2 | 1 | 20 % |
| | $C_2H_5$ | $C_2H_5$ | 2 | | 80 % |
| 79 | $CH_3$ | $nC_3H_7$ | 2 | 1 | 65 % |
| | $CH_3$ | $iC_3H_7$ | 2 | | 5 % |
| | $CH_3$ | $C_2H_5$ | 2 | | 30 % |

**Patentansprüche**

1. Azofarbstoff der allgemeinen Formel I

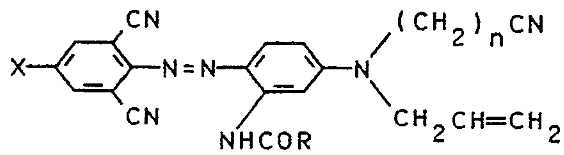

(I)

in der

X Methyl, Ethyl, Fluor, Chlor, Brom, Methoxy oder Ethoxy

R Methyl, Ethyl, n-Propyl, i-Propyl, n-Butyl, i-Butyl oder sek. Butyl und

n 2 oder 3

bedeuten.

2. Azofarbstoff nach Anspruch 1, dadurch gekennzeichnet, dμß R Ethyl, n-Propyl oder i-Propyl bedeutet.

3. Azofarbstoff nach Anspruch 1 und/oder 2, dadurch gekennzeichnet, daß R n-Propyl bedeutet.

4. Azofarbstoff nach einem oder mehreren der Ansprüche 1 bis 3, dadurch gekennzeichnet, daß X Methyl oder Ethyl bedeutet.

5. Azofarbstoff nach einem oder mehreren der Ansprüche 1 bis 4, dadurch gekennzeichnet, daß X Methyl bedeutet.

6. Azofarbstoff nach einem oder mehreren der Ansprüche 1 bis 5, dadurch gekennzeichnet, daß n gleich 2 ist.

7. Farbstoffmischung, dadurch gekennzeichnet, daß sie 2 oder mehrere Azofarbstoffe der allgmeinen Formel I des Anspruchs 1 enthält.

8. Farbstoffmischung gemäß Anspruch 7, dadurch gekennzeichnet, daß der Gewichtsanteil eines Farbstoffs 10 bis 90 %, bevorzugt 30 bis 70 %, beträgt.

9. Verfahren zur Herstellung von Azofarbstoffen der allmeinen Formel I, dadurch gekennzeichnet, daß man einen Azofarbstoff der Formel II

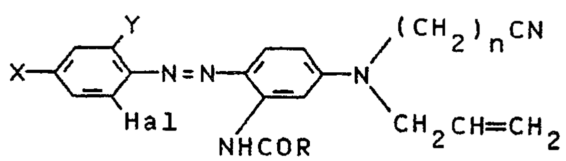

(II)

in der X, R und n die in Anspruch 1 angegebenen Bedeutungen haben, Y for Cyan oder Hal und Hal für ein Halogenatom wie Chlor oder insbesondere Brom steht einer nucleophilen Austauschreaktion unterwirft, wobei als nucleophiles Agens das Cyanidion $CN^{\ominus}$ eingesetzt wird.

10. Verwendung der Azofarbstoffe der allgemeinen Formel I des Anspruchs 1 oder deren Mischungen gemäß Anspruch 7 zum Färben und Bedrucken von hydrophoben Fasermaterialien.

Europäisches Patentamt

# EUROPÄISCHER RECHERCHENBERICHT

Nummer der Anmeldung

EP 91100353.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| D,X<br><br><br>Y | EP - A1 - 0 039 054<br>(CASSELLA AKTIENGESELLSCHAFT)<br>* Ansprüche 1-3,7-9 *<br><br>-- | 1,2,<br>4-8,10<br><br>9 | C 09 B 43/42<br>C 09 B 67/22<br>D 06 P 1/18 |
| D,Y | GB - A - 2 146 652<br>(YORKSHIRE CHEMICALS PLC)<br>* Anspruch 5 *<br>---- | 9 | |
| | | | RECHERCHIERTE SACHGEBIETE (Int Cl 5) |
| | | | C 09 B<br>D 06 P |

Der vorliegende Recherchenbericht wurde für alle Patentansprüche erstellt.

| Recherchenort | Abschlußdatum der Recherche | Prüfer |
|---|---|---|
| WIEN | 23-04-1991 | HAUSWIRTH |

KATEGORIE DER GENANNTEN DOKUMENTEN
- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument

EPA Form 1503 03 82